Europäisches Patentamt

European Patent Office

Office européen des brevets

(11) Publication number: **0 450 136 A1**

## EUROPEAN PATENT APPLICATION

(21) Application number: 90112918.9

(22) Date of filing: 06.07.90

(51) Int. Cl.5: **C09K 3/14**, B24D 3/28

(30) Priority: 30.03.90 IT 8335590

(43) Date of publication of application:
09.10.91 Bulletin 91/41

(84) Designated Contracting States:
AT BE CH DE ES FR GB LI

(71) Applicant: **CEA ABRASIVI DI COLONNELLO EMILIO**
**Zona Artigianale**
**I-33097 Spilimbergo (PN)(IT)**

(72) Inventor: **Colonnello, Emilio**
**Zona Industriale**
**I-33097 Spilimbergo (PN)(IT)**

(74) Representative: **D'Agostini, Giovanni, Dr.**
**D'AGOSTINI ORGANIZZAZIONE n. 17 via G.Giusti**
**I-33100 Udine(IT)**

(54) Abrasive tool and method of realization.

(57) An abrasive tool realized with abrasive material in powder or granulated abrasive material, kneaded with binder and hardened in rigid or flexible shape (grinding wheels, disks, etc), wherein the abrasive material is of the common type as silicium carbide, boron carbide, corundum, aluminium oxides and/or other, characterized by the fact that to said abrasive common materials according to the precharacterizing part of the first claim, diamond in powder or granulated is added as further abrasive material in mix with them; said abrasive material mix with diamond is kneaded and hardened with a binder containing polyester and/or epoxy resin basis or magnesite, or chlorinate of magnesium.

EP 0 450 136 A1

Rank Xerox (UK) Business Services

The invention concerns abrasive tools hardware for different abrasive uses, lapping and polishing included, for working marbles, granites, natural stones or artificial stones and other materials, said abrasive being of the type of those obtained in cold condition or in worm condition for the binding of the cementing material. The abrasive or grinding or lapping or polishing tools being further utilizable glass and optical industry.

Actually the abrasive tools can be substantially divided in two main categories:

Abrasive tools in which the abrasive material is binded with magnesium basis or other cement basis or other polymerized binder basis in which the abrasive material is the well known and common silicium carbide, or boron carbide, or corundum, or aluminium oxides and other, are well known.

The most expensive abrasive tools with diamond powder basis are further well known.

The common abrasive tools as the previous ones do not reach the diamond basis abrasive tools efficiency.

The diamond basis abrasive tools type (grinding wheels and rigid disks or floppy disks) have the respective diamond powder binded with phenolic resins or metallic powder, manufactured with the so called syntherization process, or by pressing in worm condition (with temperatures over 80° C).

The abrasive materials without diamond basis have a shallow cost and are used for general use, while the the abrasive materials with diamond basis are more expensive and are generally used for cutting, fine abrasion or even polishing and lapping, and obviously in all the sectors where is required a very high efficiency particularly for working hard materials, as for example glass, marble, granite, etc.

Purpose of the present invention is to realize a new abrasive tool of any desired shape or form and gender (grinding wheel, disk, cup or any other wished shape), in which the abrasive tool:

- is more efficient if compared to the well known commercially usually available abrasive materials (first ones);
- is able to work hard materials as the well known abrasives with diamond powder basis;
- its cost is less expensive if compared of well known diamond powder basic abrasive.

Surprisingly the inventor discovered that this and other purposes are simply reached with the the solution of the present invention as claimed, realizing an abrasive tool realized with abrasive material in powder or granulated abrasive material, kneaded with binder and hardened in rigid or flexible shape (grinding wheels, disks, etc), wherein the abrasive material is of the common type as silicium carbide, boron carbide, corundum, aluminium oxides and/or other, characterized by the fact that:

- to said abrasive common materials according to the precharacterizing part of the first claim, is added as further abrasive material in mix with them, diamond in powder or granulated;
- said abrasive material mix with diamond is kneaded and hardened with a binder containing polyester and/or epoxy resin basis or magnesite, or chlorinate of magnesium at a temperature equal or under 80° C.

With this solution we obtain in simple process and never known or used before, a new kind of abrasive tool that positions itself in an intermediate category between the two opposite existing above types and for this giving characteristics more high of the common traditional abrasive tools, without use limitations for working type, roughing or purpose and without the high costs and the limitations that instead give the actual abrasive diamond tools.

The hardening treatment of the binder in the knead with temperature so shallow, thanking to the proposed new binder types, further allows to realize a priceless product with high performance, productivity and fines in working, the obtained tool having precise shape being strongly reduced shape modifications in hardening after forming because the very low temperature hardening used.

Advantageously the production process of the abrasive material according to the invention provides:

- The knead and the mixing of the abrasive materials that include according to the invention, common abrasive material with addition of natural or artificial diamond abrasive material in powder or granulated, with binding material according to the characteristics of the main claim (knead with polyester and:or epoxy resins, or magnesite, or chlorinate of magnesium);
- The cast of the obtained compound (after having accurately mixed the components) in well known molds, depending of the forms or shapes desired for obtaining the respective grinding tools and with;
- Its hardening in cold condition (or at room temperature) or in worm condition (lower than 80° C), under pressure or not depending on the specific exigencies.

Advantages derive further from reduction time in low temperature process, in the fact that we can use inexpensive apparatuses and machineries, having the possibility of finally produce high quantity of abrasive, in any forms (Not always realizable in other way for high costs that this involves) and to more contained costs and of optimal quality.

The details of execution can however vary in the ambit of theabove described and claimed characteristics .

**Claims**

1. An abrasive tool realized with abrasive material in powder or granulated abrasive material, kneaded with binder and hardened in rigid or flexible shape (grinding wheels, disks, etc), wherein the abrasive material is of the common type as silicium carbide, boron carbide, corundum, aluminium oxides and/or other, characterized by the fact that:
   - to said abrasive common materials according to the precharacterizing part of this claim, diamond in powder or granulated is added as further abrasive material in mix with them;
   - said abrasive material mix with diamond is kneaded and hardened with a binder containing polyester and/or epoxy resin basis or magnesite, or chlorinate of magnesium.

2. A method for abrasive tools production utilizing powder or granulated material, kneaded with binder and hardened in rigid or flexible mode in solid shapes (grinding wheels, disks, etc.), utilizing an abrasive material of common type as silicium carbide, boron carbide, corundum, aluminium oxides and other, according to claim 1, characterized in that:
   - To said common abrasive material according to the precharacterizing part of this claim, diamond in powder or granulated is added as further abrasive material in mix with them;
   - Said abrasive material mix with diamond is kneaded and hardened with a binder of polyester and/or epoxy resins, or magnesite, or chlorinate of magnesium, at a temperature equal or lower then 80° C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WORLD PATENT INDEX, LATEST, accession no. 87-202271 [29], Derwent Publications Ltd, London, GB; & JP-A-62 130 179 (FUJIMI KENMAZAI KOG.) * Whole abstract * | 1,2 | C 09 K 3/14 B 24 D 3/28 |
| X | WORLD PATENT INDEX, LATEST, accession no. 84-265858 [43], Derwent Publications Ltd, London, GB; & JP-A-59 161 267 (SANWA KENMA KOGYO K.K.) * Whole abstract * | 1,2 | |
| X | WORLD PATENT INDEX, LATEST, accession no. 86-146309 [23], Derwent Publications Ltd, London, GB; & JP-A-61 079 573 (HITACHI CHEMICAL K.K.) * Whole abstract * | 1,2 | |
| X | WORLD PATENT INDEX, LATEST, accession no. 77-06452Y [04], Derwrent Publications Ltd, London, GB; & JP-A-51 142 190 (SHOWA DENKO K.K.) * Whole abstract * | 1,2 | |
| A | GB-A-1 093 931   (ICI LTD) * Page 1, lines 49-65,75-81; page 2, lines 1-7; claims * | 1,2 | TECHNICAL FIELDS SEARCHED (Int. Cl.5) C 09 K |

The present search report has been drawn up for all claims

| Place of search | Date of completion of search | Examiner |
|---|---|---|
| The Hague | 10 April 91 | LEDER M. |